# EUROPEAN PATENT SPECIFICATION

(11) **EP 3 291 119 B1**
(45) Date of publication and mention of the grant of the patent: **06.05.2020**
(21) Application number: 16186516.7
(22) Date of filing: 31.08.2016
(51) Int. Cl.: G06F 21/55, G06F 21/53, H04L 29/06, G06F 21/62, G06F 21/88

(54) **AUTOMOTIVE MONITORING AND SECURITY SYSTEM**
AUTOMOTIVES ÜBERWACHUNGS- UND SICHERHEITSSYSTEM
SYSTÈME DE SURVEILLANCE ET DE SÉCURITÉ D'AUTOMOBILE

(43) Date of publication of application: 07.03.2018
(73) Proprietor: Bayerische Motoren Werke Aktiengesellschaft, 80809 München (DE)
(72) Inventor: Abo El-Fotouh, Dr. Mohamed, 80798 München (DE); Gozalvez Serrano, Dr.-Ing. David, 80636 München (DE)

(56) References cited:
- US-A1- 2014 082 690
- US-A1- 2015 324 583
- US-A1- 2015 324 610
- NILSSON D K ET AL: "A Framework for Self-Verification of Firmware Updates over the Air in Vehicle ECUs", 2008 IEEE GLOBECOM WORKSHOPS; 30 NOV.-4 DEC. 2008; NEW ORLEANS, LA, USA, IEEE, PISCATAWAY, NJ, USA, 30 November 2008 (2008-11-30), pages 1-5, XP031405600, ISBN: 978-1-4244-3061-1

## Description

The present invention relates to an automotive monitoring and security system for active manipulation and intrusion responses.

Modern vehicles comprise a plurality of Electronic Control Units (ECUs). Each ECU may be an embedded system that processes data received from different modules located in a vehicle, e.g. sensors and/or control actuators. In particular, ECUs provide vehicle features/functionalities for appropriately reacting to situations/events detected when processing the data. However, ECUs are increasingly involving features/functionalities with respect to critical tasks that are vulnerable to attacks. Such attacks include unauthorized access to vehicle features and manipulation and/or activation of vehicle features. Moreover, the ECUs are more and more networked such that an attack to one ECU may lead to an attack of all networked ECUs. In the worst case, a whole vehicle board network can be affected by a single attack.

In order to prevent and/or handle such attacks, security measures are known. In particular, it is known to perform a secure boot process. During the secure boot process, a hierarchical chain of cryptographic hash values for software that is executed on an ECU can be calculated and stored. The cryptographic hash values may be calculated using a particular cryptographic hash function, e.g. SHA-256. A first cryptographic hash value may correspond to an initial state of the software before being executed, followed by cryptographic hash values of a next valid state of the software component. During a boot process of an ECU, a cryptographic hash value check is performed for the software to be executed on the ECU. In particular, a cryptographic hash value a present state of the software is calculated. If the calculated cryptographic hash value does not match a stored hash value of a latest valid state of the software, a manipulation is detected. The manipulation can be reported by e.g.
- writing an error code for later statistical analysis or as proof of the detected manipulation;
- reporting the presence of the detected manipulation by writing corresponding entries in a manipulation log file for later statistical or as proof of the detected manipulation; and/or
- transmitting a message, log file or trouble diagnostic code to a backend server for statistical analysis, as proof of the detected manipulation or for triggering - from the backend server - an appropriate response in the manipulated ECU.

One drawback of the above-mentioned security measure is, the attacker may try hiding the manipulation, e.g. by deleting or altering the stored chain of cryptographic hash values. In order to overcome this drawback, the chain of cryptographic hash values can be stored in a secure storage which further ensures an authentic provision of the stored chain of cryptographic hash values.

Moreover, during runtime of the ECU, it is known to introduce an On-Board Diagnostic (OBD) - System. An OBD system provides a standardized series of Diagnostic Trouble Codes (DTCs) and additional real-time data when a malfunction within the software running on the ECU is detected.

US 2015/0324610 A1 describes a method and an electronic hardware security module for managing software functionalities in a control unit. The hardware security module records results of a security functionality and acts on software functionalities as a function of the results. The described method is used in conjunction with an electronic security module which is utilized in a control unit, especially in the automotive field, in security-relevant areas. In most applications in the security-relevant areas the manipulation-proof or non-monitorable storing of data is an essential requirement. Cryptographic keys, which are utilized in symmetrical or asymmetrical encryption methods, are used for this purpose. The employed codes and encryption methods constitute secrets that need to be kept hidden from attackers. Other uses in security-relevant areas, for instance, concern the protection against unauthorized modifications, such as the storing of changed serial numbers or odometer readings, the prevention of unauthorized tuning measures, etc. The described method focuses on keeping cryptographic secrets secure, with the aim to provide secure environments in control units, in which functionalities that must have access to and/or modify these secrets can be executed. The document is silent with respect to software components running on a secure ECU being isolated using a virtualization technique, and the secure ECU comprising at least one security-critical software component. The document is further silent with respect to a manipulation detection component operable to detect a software manipulation on at least one software component of the software components running on the secure ECU.

US 2014/0082690 A1 describes a mobile computing system for providing a high-security execution environment is provided. The mobile computing system separates execution environments in the same mobile device, for example a smart phone, on the basis of virtualization technology and manages user-specific execution environments using the same hardware security module, thereby facilitating protection of personal privacy. The document is silent with respect to software components running on a secure ECU installed in a vehicle, the software components being isolated using a virtualization technique, and the secure ECU comprising at least one security-critical software component. The document is further silent with respect to a manipulation detection component operable to detect a software manipulation on at least one software component of the software components running on the secure ECU.

A major drawback to the above-mentioned security measures is, that the actions performed inresponse to the detected manipulations are passive and cannot prevent the manipulated software from being executed on the ECU. Hence, the security and safety of the vehicle features provided by the respective software running on the CPU cannot be guaranteed. The only active action that can be performed in response to a detected manipulation may be stopping the operation of the affected ECU completely. This has a huge impact on the device functionality since vehicle features that might be important for the safety of the passengers in the vehicle are also deactivated.

It is an object of the present invention to overcome the above-mentioned drawbacks by providing an automotive monitoring and security system for flexible manipulation and intrusion actions while ensuring security-critical functionality.

This problem is solved by the independent claims. Preferred embodiments are described in the dependent claims.

According to a first aspect of the invention, an automotive security system for performing dynamic actions in response to a manipulation and/or intrusion detection in a vehicle is provided. The automotive security system comprises:
at least one secure electronic control unit, ECU,
   - wherein software components running on the secure ECU are isolated using avirtualization technique, and
   - wherein the secure ECU comprises at least one security-critical software component; and
a manipulation detection component operable to detect a software manipulation on the software components during a boot process of the secure ECU and/or during a runtime of the secure ECU, wherein upon detection of a software manipulation on at least one software component, the manipulation detection component is operable to actively de-activate at least the manipulated software component while ensuring that the security-critical software component remains active.

Using the virtualization technique in the at least one secure ECU has the advantage that it enables a good isolation of the different software components running on the secure ECU. Accordingly, it is advantageously prevented that a manipulated software component can involve a danger to the driver and/or the passengers in the vehicle by e.g. sending ECU-resets during driving.

Moreover, software components that are security-critical to the vehicle are isolated from other software components running on the secure ECU. The manipulation detection component can e.g. perform a secure boot operation. In case the manipulation detection component detects - e.g. during the secure boot operation - a software manipulation on at least one software component running on the secure ECU, the manipulation detection component can actively and dynamically respond to the detected manipulation while ensuring, that the security-critical software component running on the secure ECU remains active. The security-critical software component can be for example a software component related to one or more functions of the secure ECU that are relevant for the safety of the driver and/or other passengers in the vehicle (e.g. an emergency call function in a respective telecommunication control unit, TCU).

For example, the manipulation detection component can actively and dynamically
- de-activate at least the manipulated software component in a current life-cycle of the software components running on the secure ECU by de-loading at least the manipulated software component (de-load) while ensuring that the security-critical software component remains active; and/or
- de-activate at least the manipulated software component in a next life-cycle of the software components running on the secure ECU (de-activate) while ensuring that the security-critical software component remains active; and/or
- send a notification to a remote backend server (request), the notification comprising data with respect to the detected manipulation and upon receiving, from the backend server, a confirmation (response) to de-load/de-activate at least the manipulated software component, actively initiating the de-loading/de-activating while ensuring that the security-critical software component remains active.

However, advantageously, the manipulation detection component is able to actively and dynamically react towards a detected manipulation without the involvement of a third-party, e.g. the remote backend server.

Which software components are to be de-loaded/de-activated may depend on the software component that was manipulated. For example, different response levels can be pre-defined. The pre-defined response levels can be stored in a memory storage located in the vehicle and accessible by the manipulation detection component and/or at the backend server. In other words, when a manipulation is detected, a correspondingly pre-defined software component or set of software components can be de-loaded/de-activated. An example of a pre-defined response level in response to a manipulation detection might be de-loading/de-activating all software components running on the secure ECU except of the security-critical software component. Such a pre-defined response level has the technical advantage of a minimum impact of the manipulation while ensuring the security-critical functionality. In other words, the operation of safety-critical vehicle functions can still be guaranteed by only de-loading/de-activating the manipulated software component not required for the operation of the security-critical software component while not de-loading/de-activating the security-critical software component running on the secure ECU. Hence, the availability of the security-critical vehicle function(s) provided by/corresponding to the security-critical software component is greatly improved.

The manipulation detection component can be located on the secure ECU in the vehicle. Alternatively, the manipulation detection component can be located on a separate, central ECU in the same vehicle communicatively coupled to (connected to) the secure ECU. In case the manipulation detection component is located on the central ECU, if a manipulation is detected, the manipulation detection component may send a secure signal to the secure ECU, wherein the secure signal causes the respective action to be performed (de-load, de-activate, notification to backend server as outlined above).

According to an embodiment of the invention, the automotive security system further comprises an intrusion detection component operable to detect an intrusion to the software components during a runtime of the secure ECU, wherein upon detection of an intrusion to at least one software component, the intrusion detection component is operable to actively de-activate at least the affected software component where the intrusion was detected while ensuring that the security-critical software component remains active.

For example, the intrusion detection component can detect an intrusion to a software component running on the secure ECU by detecting an anomaly in a behavior of at least one software component running on the ECU. Detecting an anomaly may comprise receiving an unexpected signal or signal-sequences of the respective software component. Anomalies of the software components can be pre-determined and e.g. stored in a memory storage located in the vehicle and accessible by (communicatively coupled to) the intrusion detection component and/or the backend server. In another example, anomalies can be detected using suitable heuristics.

For example, if an intrusion to a software component is detected, the intrusion detection component can actively and dynamically
- de-activate at least the affected software component in a current life-cycle of the software components running on the secure ECU by de-loading at least the affected software component (de-load) while ensuring that the security-critical software component remains active; and/or
- de-activate at least the affected software component in a next life-cycle of the software components running on the secure ECU (de-activate) while ensuring that the security-critical software component remains active; and/or
- send a notification to a backend server (request), the notification comprising data with respect to the detected intrusion and upon receiving, from the backend server, a confirmation (response) to de-load/de-activate at least the affected software component, actively initiating the de-loading/de-activating while ensuring that the security-critical software component remains active.

However, advantageously, the intrusion detection component is also able to actively and dynamically react towards a detected intrusion without the involvement of a third-party, e.g. the remote backend server.

The intrusion detection component can be located on the secure ECU in the vehicle. Alternatively, the intrusion detection component can be located in the same vehicle on a separate ECU or - together with the manipulation detection component - on the central ECU communicatively coupled to (connected with) the secure ECU (cf. above). In case the intrusion detection component is not located in the secure ECU, when an intrusion is detected, the intrusion detection component can send a secure signal to the secure ECU, wherein the secure signal causes the respective action to be performed (de-load, de-activate, notification to backend server as outlined above).

The manipulation detection component is further operable to detect a manipulation to the software components during a runtime of the secure ECU, wherein upon detection of such a manipulation to at least one software component, the manipulation detection component is operable to actively de-activate at least the affected software component the manipulation was detected on while ensuring that the security-critical software component remains active.

According to a further embodiment of the invention, the manipulation detection component and/or the intrusion detection component are running on a separate ECU or on a Backend server and is/are operable to send a secure signal to the secure ECU to react against the detected manipulated software component and/or the intruded software component, respectively.

For example, the secure signal to the secure ECU may comprise a command that tells the secure ECU which virtual Machine and/or software containers shall be de-activated and/or de-loaded, respectively. Additionally, the secure signal to the secure ECU may comprise a command when the de-activation and/or the de-loading is to be performed (i.e. e.g. immediately, in a next lifecycle, etc.). Moreover, the reaction against the manipulated software component and/or the intruded software component may comprise de-loading/deactivating specific virtual machines/software containers at a specified time.

According to a further embodiment of the invention, the security-critical software component is running on a secure element of the secure ECU.

Running the security-critical software component on a secure element of the secure ECU further improves the availability and reliability of the vehicle functions provided by/corresponding to the security-critical software component. In particular, the secure element may provide a manipulation-free area which is very hard to manipulate - however - with the trade-off that only a small software component can be executed.

According to a further embodiment of the invention, the secure element is one of a Trusted Execution Environment, TEE, or a Hardware Security Module, HSM.

According to a further embodiment of the invention, the software components running on the secure ECU are assigned with a priority and the de-activation of at least the manipulated and/or at least the software component is further based on the assigned priority.

For example, the security-critical software component can be assigned a priority '1' whereas software components that are not security-critical can be assigned a priority '2'. Accordingly, the pre-defined different response levels can further take into account the assigned priority of the respective software component. For example, if a manipulation/intrusion is detected, it may be e.g. pre-defined to only de-activate the software components having priority '2' representing a lower priority that priority '1'.

According to a further embodiment of the invention, the virtualization technique is one of a hardware virtualization or a software virtualization.

For example, a hardware virtualization may comprise the concept of virtual machines. Accordingly, a virtualized domain for each software component may be a separate virtual machine. Each virtual machine may act like a separate computer having its own operating system. Accordingly, when a manipulation/intrusion is detected, the respective virtual machine(s) can be de-loaded/de-activated.

Further, a software virtualization may be realized using the concept of isolated software containers that are operating in the same operating system. For example, each software component may be running in a corresponding isolated software container. Accordingly, when a manipulation/intrusion is detective, the respective software containers may be de-loaded/de-activated.

According to another aspect of the invention, an automotive security method for performing dynamic actions in response to a manipulation and/or intrusion detection in a vehicle is provided. The automotive security method comprises:
detecting, by a manipulation detection component, a software manipulation on at least one software component during a boot process of a secure electronic control unit, ECU and/or during a runtime of the secure ECU,
   - wherein the software components running on the secure ECU are isolated using a virtualization technique, and
   - wherein the secure ECU comprises at least one security-critical software component; and
upon detection of a software manipulation on at least one software component, actively de-activating, by the manipulation detection component, the manipulated software component while ensuring that the security-critical software component remains active.

According to another aspect of the invention, a computer program product is provided comprising instructions thereon, which, when loaded and executed by at least one processor, cause the at least one processor to perform a method according to any one of claims 7 to 12.

According to yet another aspect of the invention, a vehicle is provided, the vehicle comprising an automotive security system according to any one of claims 1-6.

The aspects defined above and further aspects of the present invention are apparent from the examples of embodiment to be described hereinafter and are explained with reference to the examples of embodiment. The invention will be described in more detail hereinafter wit reference to examples of embodiment. However, it is apparent to the person skilled in the art that the invention is not limited to the examples of embodiment.
- **Figure 1**: shows an exemplary vehicle comprising the automotive security system;
- **Figure 2**: shows an exemplary secure ECU realizing virtual machine virtualization;
- **Figure 3**: shows an exemplary secure ECU realizing software container virtualization.

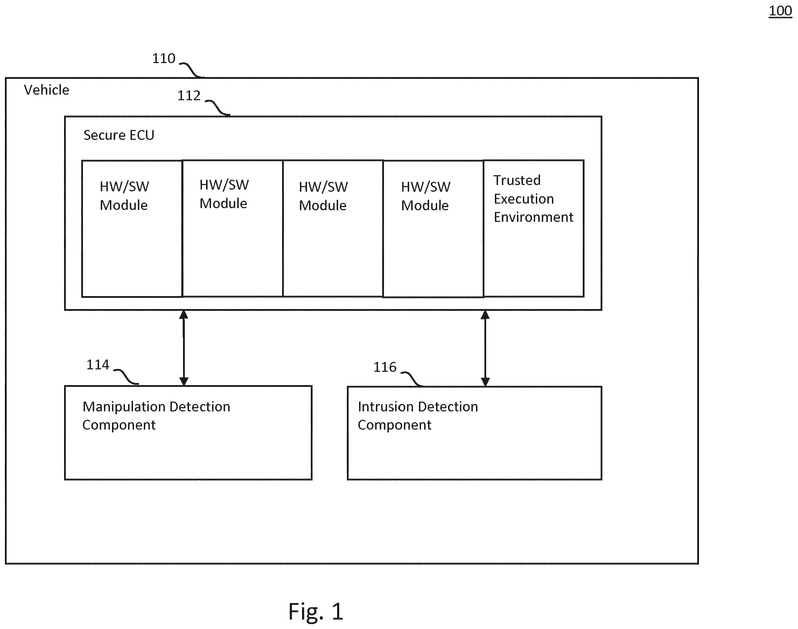

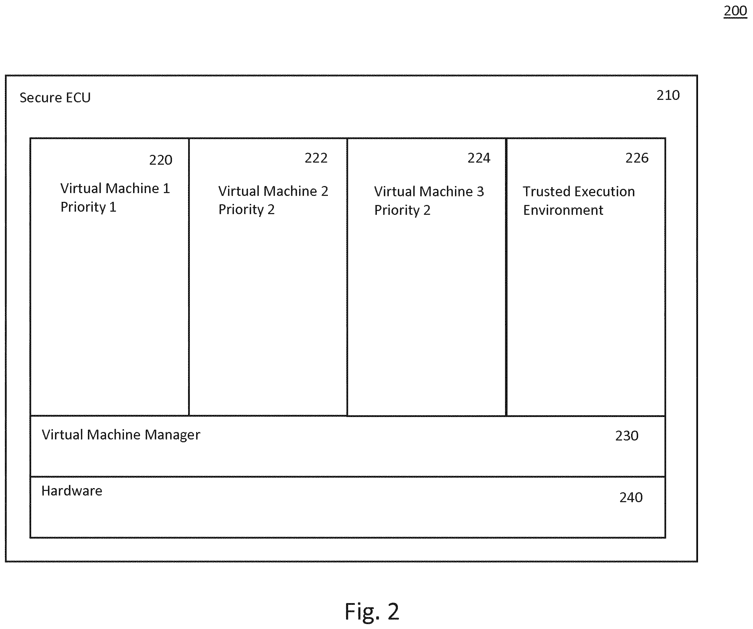

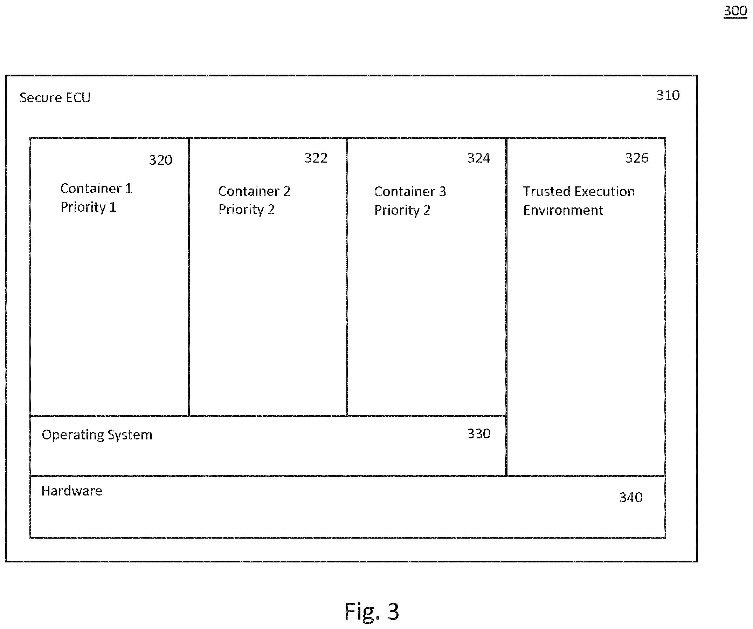

**Figure 1** shows an exemplary vehicle 110 comprising the automotive security system 100. In particular, the automotive security system 100 comprises at least one secure electronic control unit, ECU, 112. Software components running on the secure ECU 112 are isolated using a virtualization technique. The virtualization technique may be e.g. realized using virtual machine virtualization (which is explained in more detail with reference to **Figure 2** below) or using software container virtualization (which is explained in more detail with reference to **Figure 3** below). Further, the secure ECU 112 comprises at least one security-critical software component. For example, the security-critical software component can be a software component providing (related to) one or more functions of the secure ECU 112 that are relevant for the safety of the driver and/or other passengers in the vehicle (e.g. an emergency call function in a respective telecommunication control unit, TCU).

Using the virtualization technique in the at least one secure ECU 112 advantageously enables a good isolation of the different software components running on the secure ECU 112. Accordingly, it is advantageously prevented that a manipulated software component can involve a danger to the driver and/or the passengers in the vehicle 110 by e.g. sending ECU-resets during driving. Moreover, software components that are security-critical to the vehicle are isolated from other software components running on the secure ECU 112.

Further, the automotive security system 100 may comprise a manipulation detection component 114 operable to detect a software manipulation on the software components during a boot process of the secure ECU 112. Additionally, the manipulation detection component 114 is operable to detect a software manipulation on the software components during a runtime of the secure ECU 112. Upon detection of a software manipulation on at least one software component, the manipulation detection component 114 is operable to actively de-activate at least the manipulated software component while ensuring that the security-critical software component remains active.

The manipulation detection component 114 can e.g. perform a secure boot operation. In case the manipulation detection component 114 detects - e.g. during the secure boot operation - a software manipulation on at least one software component running on the secure ECU 112, the manipulation detection component 114 can actively and dynamically respond to the detected manipulation while ensuring, that the security-critical software component running on the secure ECU 112 remains active.

For example, the manipulation detection component 114 can actively and dynamically
- de-activate at least the manipulated software component in a current life-cycle of the software components running on the secure ECU 112 by de-loading at least the manipulated software component (de-load) while ensuring that the security-critical software component remains active; and/or
- de-activate at least the manipulated software component in a next life-cycle of the software components running on the secure ECU 112 (de-activate) while ensuring that the security-critical software component remains active; and/or
- send a notification to a backend server (request), the notification comprising data with respect to the detected manipulation and upon receiving, from the backend server, a confirmation (response) to de-load/de-activate at least the manipulated software component, actively performing the de-loading/de-activating while ensuring that the security-critical software component remains active.

However, advantageously, the manipulation detection component 112 is able to actively and dynamically react towards a detected manipulation without the involvement of a third-party, e.g. the remote backend server (not shown).

Which software components are to be de-loaded/de-activated may depend on the software component that was manipulated. For example, different response levels can be pre-defined. The pre-defined response levels can be stored in a memory storage (not shown) located in the vehicle 110 and accessible by (communicatively coupled to) the manipulation detection component 114 and/or at the backend server, respectively. In other words, when a manipulation is detected, a correspondingly pre-defined software component or set of software components can be de-loaded/de-activated. An example of a pre-defined response level in response to a manipulation detection might be de-loading/de-activating all software components running on the secure ECU 112 except of the security-critical software component. Such a pre-defined response level has the technical advantage of a minimum impact of the manipulation to the vehicle functions provided by the software components of the secure ECU 112 while ensuring the security-critical functionality.

The manipulation detection component 114 can be located on the secure ECU 112 in the vehicle. Alternatively, the manipulation detection component 114 can be located on a separate, central ECU (not shown) in the same vehicle 110. In case the manipulation detection component 114 is located on the central ECU, if a manipulation is detected, the manipulation detection component 114 may send a secure signal to the secure ECU 112, wherein the secure signal causes the respective action to be performed (de-load, de-activate, notification to backend server as outlined above).

Advantageously, the operation of safety-critical vehicle functions can still be guaranteed by only de-loading/de-activating at least the manipulated software component while not de-loading/de-activating the security-critical software component running on the secure ECU 112. Hence, the availability of the security-critical vehicle functions of the vehicle 110 provided by (corresponding to) the security-critical software component and accordingly the security of the driver/passengers are greatly improved.

The automotive security system 100 may further comprise an intrusion detection component 116. The intrusion detection component 116 is operable to detect an intrusion to the software components during a runtime of the secure ECU 112. Upon detection of an intrusion to at least one software component, the intrusion detection component 116 is operable to actively de-activate at least the affected software component the intrusion was detected while ensuring that the security-critical software component remains active.

For example, the intrusion detection component 116 can detect an intrusion to a software component running on the secure ECU 112 by detecting an anomaly in a behavior of at least one software component running on the secure ECU 112. Detecting an anomaly may comprise receiving an unexpected signal or signal-sequences of the respective software component. Which behavior of the software components running on the secure ECU 112 is an anomaly can be pre-determined and e.g. stored in a memory storage located in the vehicle 110 and accessible by (communicatively coupled to) the intrusion detection component 116 and/or the backend server. In another example, anomalies can be detected by the intrusion detection component 116 applying suitable heuristics.

For example, if an intrusion to a software component is detected, the intrusion detection component 116 can actively and dynamically
- de-activate at least the affected software component in a current life-cycle of the software components running on the secure ECU 112 by de-loading at least the affected software component (de-load) while ensuring that the security-critical software component remains active; and/or
- de-activate at least the affected software component in a next life-cycle of the software components running on the secure ECU 112 (de-activate) while ensuring that the security-critical software component remains active; and/or
- send a notification to a backend server (request), the notification comprising data with respect to the detected intrusion and upon receiving, from the backend server, a confirmation (response) to de-load/de-activate at least the affected software component, actively performing the de-loading/de-activating while ensuring that the security-critical software component remains active.

However, advantageously, the intrusion detection component 116 is also able to actively and dynamically react towards a detected intrusion without the involvement of a third-party, e.g. the remote backend server (not shown).

The intrusion detection component 116 can be located on the secure ECU 114 in the vehicle 110. Alternatively, the intrusion detection component 116 can be located in the same vehicle 110 on a separate ECU or - together with the manipulation detection component 114 - on the central ECU communicatively coupled to (connected to) the secure ECU 114 (cf. above). In case the intrusion detection component 116 is not located in the secure ECU 112, when an intrusion is detected, the intrusion detection component 116 can send a secure signal to the secure ECU 112, wherein the secure signal causes the respective action to be performed (de-load, de-activate, notification to backend server as outlined above).

As outlined above, the manipulation detection component 114 is further operable to detect a manipulation to the software components during a runtime of the secure ECU 112, wherein upon detection of such a manipulation to at least one software component, the manipulation detection component 114 is operable to actively de-activate at least the affected software component the manipulation was detected on while ensuring that the security-critical software component remains active. The manipulation detection component 114 can actively and dynamically perform one or more of the actions as explained above.

The manipulation detection component 114 and/or the intrusion detection component 116 may be running on a separate ECU or on a Backend server and is/are operable to send a secure signal to the secure ECU 112 to react against the detected manipulated software component and/or the intruded software component, respectively.

For example, the secure signal to the secure ECU 112 may comprise a command that tells the secure ECU 112 which virtual machine 220, 222, 224 and/or software containers 320, 322, 324 shall be de-activated and/or de-loaded, respectively (which is explained in more detail with respect to **Figures 2** and **3** below). Additionally, the secure signal to the secure ECU 112 may comprise a command when the de-activation and/or the de-loading is to be performed (i.e. e.g. immediately, in a next lifecycle, etc.). Moreover, the reaction against the manipulated software component and/or the intruded software component may comprise de-loading/deactivating specific virtual machines 220, 222, 224/software containers 320, 322,324 at a specified time.

The security-critical software component may be running on a secure element 226, 326 of the secure ECU 112.

Running the security-critical software component on a secure element 226, 326 of the secure ECU 112, 200, 300 further improves the availability and reliability of the vehicle functions provided by/corresponding to the security-critical software component. In particular, the secure element corresponds to a manipulation-free area which is very hard to manipulate. The secure element can be one of a Trusted Execution Environment, TEE, or a Hardware Security Module, HSM. The TEE may be a secure area where code and data loaded inside the TEE may be protected with respect to confidentiality and integrity. In particular, the TEE may be an isolated execution environment that provides security features to the code and data loaded inside including e.g. an isolated execution. In other words, the TEE is operable to provide secure functionalities similar to the functionalities provided by a HSM.

The software components running on the secure ECU 112, 210, 310 may be assigned with a priority. Accordingly, the de-activation of at least the manipulated and/or at least the intruded software component may be further based on the assigned priority. For example, the security-critical software component can be assigned a priority '1' whereas software components that are not security-critical can be assigned a priority '2'. Accordingly, the pre-defined different response levels can further take into account the assigned priority of the respective software component. For example, if a manipulation/intrusion is detected, it may be e.g. pre-defined to only de-activate the software components having priority '2' being a priority lower than priority '1'.

The automotive security system 100 hence enables active and dynamic manipulation/intrusion actions in a contained manner, i.e. within the vehicle 110 without the mandatory participation of an external component, e.g. the backend server. Further, the automotive security system 100 enables active and dynamic manipulation/intrusion actions with a limited impact to the functionality of the secure ECU 112, 210, 310 and provides advantageously a good isolation of manipulated/intruded software components running on the secure ECU 112, 210, 310. Hence, the operation of security-critical functions provided by security-critical software components running on the secure ECU 112, 210, 310 is ensured even in case a manipulation and/or intrusion is detected and therefore, the security of the driver and the passengers of the vehicle 110 is significantly improved. Further, sufficient actions without the involvement of external components - e.g. the remote backend server - in response to a manipulation and/or intrusion detections are guaranteed. Finally, manipulations/intrusions from manipulated/correspondingly affected software components that might lead towards a danger to a driver/passengers of the vehicle 110, e.g. by sending ECU resets during driving, are prevented. Accordingly, it is further prevented that networked ECUs are affected by an attack (manipulation and/or intrusion) of at least one software component of the secure ECU networked to further (secure) ECUs. Accordingly, it is prevented that a whole vehicle board network can be affected by a single attack to one secure ECU.

**Figure 2** shows an exemplary secure ECU 210 where the virtualization technique is hardware virtualization.

In particular, the hardware virtualization is realized using virtual machines (VMs) 220, 222, 224, 226. In exemplary secure ECU 210 a trusted execution environment (TEE), 226 is realized as VM, where the manipulation detection component 112 and the intrusion detection component 114 are running on. Further, a virtualized domain for each software component may be a separate virtual machine 220, 222, 224. Each virtual machine 220, 222, 224, 226 may act like a separate computer having its own operating system. Accordingly, when a manipulation/intrusion is detected, the respective virtual machine(s) can be de-loaded/de-activated (as explained in detail with reference to **Figure 1** above). The VMs 220, 222, 224, 226 are managed by a virtual machine manager (VMM) 230 running on a suitable hardware 240. Further, in this example, a software component is running on each of the VMs 220, 222, 224. In addition, a priority is assigned to each of the VMs 220, 222, 224. VM 220 is assigned a priority '1' whereas VMs 222 and 224 are each assigned a priority '2'. For example, VM 220 may run the security-critical software component whereas VMs 222 and 224 may run software components that are not security-critical. If the manipulation detection component 112 detects a manipulation to a software component running on VM 224, one exemplary pre-defined response level may require de-activating only VM 224 in order guarantee the operation of VM 220. Another exemplary pre-defined response level may require de-activating all VMs except the VMs that have an assigned priority '1' - i.e. VM 220 and except the TEE 226 in order to guarantee the operation of VM 220 and of the manipulation detection component 114 and the intrusion detection component 112 running on TEE 226.

**Figure 3** shows another exemplary secure ECU 310 where the virtualization technique is realized using software virtualization.

In this example, the software virtualization is realized using the concept of isolated software containers 320, 322, 324 that are operating in the same operating system 330. For example, each software component may be running in a corresponding isolated software container 320, 322, 324. This exemplary secure ECU 310 further comprises a trusted execution environment (TEE), 326, where the manipulation detection component 112 and the intrusion detection

component 114 are running on. Accordingly, a virtualized domain for each software component may be a separate container 320, 322, 324 and a software component is running on each of the separate containers 320, 322, 324. Further, a priority is assigned to each of the containers 320, 322, 324. Container 320 is assigned a priority '1' whereas containers 322 and 324 are each assigned a priority '2'. For example, container 320 may run the security-critical software component whereas containers 322 and 324 may run software components that are not security-critical. If e.g. the manipulation detection component 112 detects a manipulation to a software component running on container 324, one exemplary pre-defined response level may require de-activating only container 324 in order guarantee the operation of container 320. Another exemplary pre-defined response level may require de-activating all containers except the containers having an assigned priority '1' - i.e. container 320 - in order to guarantee the operation of container 320.

## Claims

1. Automotive security system (100) for performing dynamic actions in response to a manipulation and/or intrusion detection in a vehicle (110), comprising:
at least one secure electronic control unit, ECU, (112),
- wherein software components running on the secure ECU (112) are isolated using a virtualization technique, and
- wherein the secure ECU (112) comprises at least one security-critical software component, wherein the at least one security-critical software component is a software component related to one or more functions of the secure ECU (112) that are relevant for a safety of a driver and/or other passengers in the vehicle (10); and
a manipulation detection component (114) operable to detect a software manipulation on the software components during a boot process of the secure ECU (112) and/or during a runtime of the secure ECU (112), wherein upon detection of a software manipulation on at least one software component of the software components, the manipulation detection component (114) is operable to actively de-activate at least the manipulated software component while the security-critical software component remains active.

2. Automotive security system (100) according to claim 1, further comprising:
an intrusion detection component (116) operable to detect an intrusion on the software components during a runtime of the secure ECU (112), wherein upon detection of an intrusion to at least one software component of the software components, the intrusion detection component (116) is operable to actively de-activate at least the affected software component the intrusion was detected on while ensuring that the security-critical software component remains active.

3. Automotive security system (100) according to any of the preceding claims, wherein the manipulation detection component (114) and/or the intrusion detection component (116) is running on a separate ECU or on a Backend server and is operable to send a secure signal to the secure ECU (112) to react against the detected manipulated software component and/or the intruded software component, respectively.

4. Automotive security system (100) according to any one of the preceding claims, wherein the security-critical software component is running on a secure element (226, 326) of the secure ECU (112).

5. Automotive security system (100) according to claim 4, wherein the secure element (226, 326) is one of a Trusted Execution Environment, TEE, (226, 326) or a Hardware Security Module, HSM.

6. Automotive security system (100) according to any one of the preceding claims, wherein the software components running on the secure ECU are assigned with a priority and wherein the de-activation of at least the manipulated software component is further based on the assigned priority.

7. Automotive security system (100) according to any one of the preceding claims, wherein the virtualization technique is one of a hardware virtualization (220, 222, 224) or a software virtualization (320, 322, 324).

8. Automotive security method for performing dynamic actions in response to a manipulation and/or intrusion detection in a vehicle (110), the method comprising:
detecting, by a manipulation detection component (114), a software manipulation on at least one software component of software components running on the ECU (112) during a boot process of a secure electronic control unit, ECU, (112) and/or during a runtime of the secure ECU (112),
- wherein the software components running on the secure ECU (112) are isolated using a virtualization technique, and
- wherein the secure ECU (112) comprises at least one security-critical software component, wherein the at least one security-critical software component is a software component related to one or more functions of the secure ECU (112) that are relevant for a safety of a driver and/or other passengers in the vehicle (10); and
upon detection of a software manipulation on the at least one software component, actively de-activating, by the manipulation detection component (114) the manipulated software component while the security-critical software component remains active.

9. Automotive security method according to claim 8, further comprising:
detecting, by an intrusion detection component (116), an intrusion on at least one software component of the software components during a runtime of the secure ECU (112); and
upon detection of an intrusion on the at least one software component, actively de-activating, by the intrusion detection component (116), at least the affected software component the intrusion was detected on while ensuring that the security-critical software component remains active.

10. Automotive security method according to claim 8 or claim 9, wherein the manipulation detection component (114) and/or the intrusion detection component (116) is running on a separate ECU or on a Backend server and is operable to send a secure signal to the secure ECU (112) to react against the detected manipulated software component and/or the intruded software component, respectively.

11. Automotive security method according to any one of claims 8 to 10, wherein the security-critical software component is running on a secure element (226, 326) of the ECU, wherein the secure element (226, 326) may be one of a Trusted Execution Environment, TEE, (226, 326) or a Hardware Security Module, HSM.

12. Automotive security method according to any one of claims 8 to 11, wherein the software components are assigned with a priority and wherein the de-activation of at least the manipulated software component is further based on the assigned priority.

13. Automotive security method according to any one of claims 8 to 12, wherein the virtualization technique is one of a hardware virtualization (220, 222, 224) or a software virtualization (320, 322, 324).

14. Computer program product comprising instructions thereon, which, when loaded and executed by at least one processor, cause the at least one processor to perform a method according to any one of claims 8 to 13.

15. Vehicle (110) comprising an automotive security system (100) according to any one of claims 1 to 7.

## Patentansprüche

1. Automobilsicherheitssystem (100) zum Durchführen von dynamischen Aktionen in Reaktion auf eine Manipulations- und/oder Eindringungsdetektion in ein Fahrzeug (110), das Folgendes umfasst:
m indestens eine sichere elektronische Steuereinheit, ECU, (112),
- wobei Softwarekomponenten, die auf der sicheren ECU (112) laufen, unter Verwendung einer Virtualisierungstechnik isoliert sind und
- wobei die sichere ECU (112) mindestens eine sicherheitskritische Softwarekomponente umfasst, wobei die mindestens eine sicherheitskritische Softwarekomponente eine Softwarekomponente ist, die eine oder mehrere Funktionen der sicheren ECU (112) betrifft, die für eine Sicherheit eines Fahrers und/oder von anderen Passagieren im Fahrzeug (10) relevant sind; und eine Manipulationsdetektionskomponente (114), die betreibbar ist, während eines Bootprozesses der sicheren ECU (112) und/oder während einer Laufzeit der sicheren ECU (112) eine Softwaremanipulation an den Softwarekomponenten zu detektieren, wobei nach der Detektion einer Softwaremanipulation an mindestens einer Softwarekomponente der Softwarekomponenten die Manipulationsdetektionskomponente (114) betreibbar ist, mindestens die manipulierte Softwarekomponente aktiv zu deaktivieren, während die sicherheitskritische Softwarekomponente aktiv bleibt.

2. Automobilsicherheitssystem (100) nach Anspruch 1, das ferner Folgendes umfasst:
eine Eindringungsdetektionskomponente (116), die betreibbar ist, während einer Laufzeit der sicheren ECU (112) eine Eindringung an den Softwarekomponenten zu detektieren, wobei nach der Detektion einer Eindringung an mindestens einer Softwarekomponente der Softwarekomponenten die Eindringungsdetektionskomponente (116) betreibbar ist, mindestens die beeinträchtigte Softwarekomponente, an der die Eindringung detektiert wurde, aktiv zu deaktivieren, während sichergestellt ist,
dass die sicherheitskritische Softwarekomponente aktiv bleibt.

3. Automobilsicherheitssystem (100) nach einem der vorhergehenden Ansprüche, wobei die Manipulationsdetektionskomponente (114) und/oder die Eindringungsdetektionskomponente (116) auf einer separaten ECU oder auf einem Backendserver läuft und betreibbar ist, ein sicheres Signal an die sichere ECU (112) zu senden, um gegen die detektierte manipulierte Softwarekomponente bzw. die Softwarekomponente, in die eingedrungen wurde, zu reagieren.

4. Automobilsicherheitssystem (100) nach einem der vorhergehenden Ansprüche, wobei die sicherheitskritische Softwarekomponente auf einem sicheren Element (226, 326) der sicheren ECU (112) läuft.

5. Automobilsicherheitssystem (100) nach Anspruch 4, wobei das sichere Element (226, 326) eines von einer vertrauenswürdigen Ausführungsumgebung, TEE, (226, 326) oder einem Hardwaresicherheitsmodul, HSM, ist.

6. Automobilsicherheitssystem (100) nach einem der vorhergehenden Ansprüche, wobei den Softwarekomponenten, die auf der sicheren ECU laufen, eine Priorität zugewiesen ist und wobei die Deaktivierung mindestens der manipulierten Softwarekomponente ferner auf der zugewiesenen Priorität basiert.

7. Automobilsicherheitssystem (100) nach einem der vorhergehenden Ansprüche, wobei die Virtualisierungstechnik eines von einer Hardwarevirtualisierung (220, 222, 224) oder einer Softwarevirtualisierung (320, 322, 324) ist.

8. Automobilsicherheitsverfahren zum Durchführen von dynamischen Aktionen in Reaktion auf eine Manipulations- und/oder Eindringungsdetektion in ein Fahrzeug (110), wobei das Verfahren Folgendes umfasst:
Detektieren einer Softwaremanipulation an mindestens einer Softwarekomponente von Softwarekomponenten, die auf der ECU (112) laufen, während eines Bootprozesses einer sicheren elektronischen Steuereinheit, ECU, (112) und/oder während einer Laufzeit der sicheren ECU (112) durch eine Manipulationsdetektionskomponente (114),
- wobei die Softwarekomponenten, die auf der sicheren ECU (112) laufen, unter Verwendung einer Virtualisierungstechnik isoliert sind und
- wobei die sichere ECU (112) mindestens eine sicherheitskritische Softwarekomponente umfasst, wobei die mindestens eine sicherheitskritische Softwarekomponente eine Softwarekomponente ist, die eine oder mehrere Funktionen der sicheren ECU (112) betrifft, die für eine Sicherheit eines Fahrers und/oder von anderen Passagieren im Fahrzeug (10) relevant sind; und nach der Detektion einer Softwaremanipulation an mindestens einer Softwarekomponente aktives Deaktivieren der manipulierten Softwarekomponente durch die Manipulationsdetektionskomponente (114), während die sicherheitskritische Softwarekomponente aktiv bleibt.

9. Automobilsicherheitsverfahren nach Anspruch 8, das ferner Folgendes umfasst:
Detektieren einer Eindringung an mindestens einer Softwarekomponente der Softwarekomponenten während einer Laufzeit der sicheren ECU (112) durch eine Eindringungsdetektionskomponente (116) und
nach der Detektion einer Eindringung an der mindestens einen Softwarekomponente aktives Deaktivieren mindestens der beeinträchtigten Softwarekomponente, an der die Eindringung detektiert wurde, durch die Eindringungsdetektionskomponente (116), während sichergestellt ist, dass die sicherheitskritische Softwarekomponente aktiv bleibt.

10. Automobilsicherheitsverfahren nach Anspruch 8 oder Anspruch 9, wobei die Manipulationsdetektionskomponente (114) und/oder die Eindringungsdetektionskomponente (116) auf einer separaten ECU oder auf einem Backendserver laufen und betreibbar sind, ein sicheres Signal an die sichere ECU (112) zu senden, um gegen die detektierte manipulierte Softwarekomponente bzw. die Softwarekomponente, in die eingedrungen wurde, zu reagieren.

11. Automobilsicherheitsverfahren nach einem der Ansprüche 8 bis 10, wobei die sicherheitskritische Softwarekomponente auf einem sicheren Element (226, 326) der ECU läuft, wobei das sichere Element (226, 326) eines von einer vertrauenswürdigen Ausführungsumgebung, TEE, (226, 326) oder einem Hardwaresicherheitsmodul, HSM, sein kann.

12. Automobilsicherheitsverfahren nach einem der Ansprüche 8 bis 11, wobei den Softwarekomponenten eine Priorität zugewiesen ist und wobei die Deaktivierung mindestens der manipulierten Softwarekomponente ferner auf der zugewiesenen Priorität basiert.

13. Automobilsicherheitsverfahren nach einem der Ansprüche 8 bis 12, wobei die Virtualisierungstechnik eines von einer Hardwarevirtualisierung (220, 222, 224) oder einer Softwarevirtualisierung (320, 322, 324) ist.

14. Computerprogrammprodukt, auf dem Anweisungen umfasst sind, die, wenn sie von mindestens einem Prozessor geladen und ausgeführt werden, den mindestens einen Prozessor veranlassen, das Verfahren nach einem der Ansprüche 8 bis 13 durchzuführen.

15. Fahrzeug (110), das das Automobilsicherheitssystem (100) nach einem der Ansprüche 1 bis 7 umfasst.

## Revendications

1. Système de sécurité pour automobile (100) destiné à effectuer des actions dynamiques en réponse à la détection d'une manipulation et/ou d'une intrusion dans un véhicule (110) comprenant :
au moins une unité de commande électronique ECU sécurisée (112),
des composants de logiciel se déroulant sur l'ECU sécurisée (112) étant isolés en utilisant une technique de virtualisation, et
l'ECU sécurisée (112) comprend au moins un composant de logiciel critique, du point de vue de la sécurité ce composant de logiciel étant un composant de logiciel relatif à une ou plusieurs fonction(s) de l'ECU sécurisée (112) qui sont significatives pour la sécurité du conducteur et/ou d'autres passagers du véhicule (10), et
un composant de détection d'une manipulation (114) susceptible de détecter une manipulation de logiciel sur les composants de logiciel au cours d'un procédé de démarrage de l'ECU sécurisée (112) et/ou pendant la durée de fonctionnement de l'ECU sécurisée (112), lors de la détection d'une manipulation de logiciel sur au moins un composant de logiciel parmi les composants de logiciel, le composant de détection d'une manipulation (114) étant susceptible de désactiver activement au moins le composant de logiciel manipulé alors que le composant de logiciel critique pour la sécurité reste actif.

2. Système de sécurité pour automobile (100) conforme à la revendication 1,
comprenant en outre un composant de détection d'une intrusion (116) susceptible de détecter une intrusion sur les composants de logiciel pendant le fonctionnement de l'ECU sécurisée (112), lors de la détection d'une intrusion sur au moins un composant de logiciel parmi les composants de logiciel, le composant de détection d'une intrusion (116) étant susceptible de désactiver activement au moins le composant de logiciel concerné sur lequel l'intrusion a été détectée en s'assurant que le composant de logiciel critique pour la sécurité reste actif.

3. Système de sécurité pour automobile (100) conforme à l'une quelconque des revendications précédentes,
dans lequel le composant de détection d'une manipulation (114) et/ou le composant de détection d'une intrusion (116) s'exécute sur une ECU séparée ou sur un serveur dorsal et est susceptible de transmettre un signal sécurisé à l'ECU sécurisée (112) pour réagir, respectivement vis-à-vis du composant de logiciel manipulé et/ou du composant de logiciel ayant fait l'objet d'une intrusion détecté(s).

4. Système de sécurité pour automobile (100) conforme à l'une quelconque des revendications précédentes,
dans lequel le composant de logiciel critique pour la sécurité s'exécute sur un élément sécurisé (226, 326) de l'ECU sécurisée (112).

5. Système de sécurité pour automobile (100) conforme à la revendication 4,
dans lequel l'élément sécurisé (226, 326) est un environnement d'exécution de confiance TEE (226 , 326) et/ou un module matériel de sécurité HSM.

6. Système de sécurité pour automobile (100) conforme à l'une quelconque des revendications précédentes,
dans lequel on attribue une priorité aux composants de logiciel s'exécutant sur l'ECU sécurisée, et la désactivation d'au moins le composant de logiciel manipulé est en outre basée sur la priorité attribuée.

7. Système de sécurité pour automobile (100) conforme à l'une quelconque des revendications précédentes,
dans lequel la technique de virtualisation est une virtualisation de hardware (220, 222, 224) ou une virtualisation de logiciel (320, 322, 324).

8. Procédé de sécurité pour automobile permettant d'effectuer des actions dynamiques en réponse à la détection d'une manipulation et/ou d'une intrusion dans un véhicule (110), ce procédé comprenant des étapes consistant à :
détecter par un composant de détection d'une manipulation (114) une manipulation de logiciel sur au moins un composant de logiciel parmi des composants de logiciel s'exécutant sur une ECU (112) au cours d'un processus de démarrage de cette unité de commande électronique ECU sécurisée (112) et/ou au cours de l'exécution de l'ECU sécurisée (112),
les composants de logiciel s'exécutant sur l'ECU sécurisée (112) étant isolés en utilisant une technique de virtualisation, et
l'ECU sécurisée (112) comprenant au moins un composant de logiciel critique pour la sécurité, ce composant de logiciel critique pour la sécurité étant un composant de logiciel relatif à au moins une fonction de l'ECU sécurisée (112) qui est significative pour la sécurité du conducteur et/ou d'autres passagers du véhicule (10), et
lors de la détection d'une manipulation de logiciel sur le ou les composant(s) de logiciel, désactiver activement, par le composant de détection d'une manipulation (114) le composant de logiciel manipulé alors que le composant de logiciel critique pour la sécurité reste actif.

9. Procédé de sécurité pour automobile conforme à la revendication 8, comprenant en outre des étapes consistant à :
détecter par le composant de détection d'une intrusion (116) une intrusion sur au moins un composant de logiciel parmi les composants de logiciel au cours de l'exécution de l'ECU sécurisée (112), et
lors de la détection d'une intrusion sur le ou les composant(s) de logiciel désactiver activement par le composant de détection d'une intrusion (116) au moins le composant de logiciel concerné par l'intrusion ayant été détectée en s'assurant que le composant de logiciel critique pour la sécurité reste actif.

10. Procédé de sécurité pour automobile conforme à la revendication 8 ou à la revendication 9,
selon lequel le composant de détection d'une manipulation (114) et/ou le composant de détection d'une intrusion (116) s'exécute(nt) sur une ECU séparée ou sur un serveur dorsal et est(sont) susceptible(s) de transmettre un signal de sécurité à l'ECU sécurisée (112) pour réagir respectivement vis-à-vis du composant de logiciel manipulé et/ou du composant de logiciel ayant fait l'objet d'une intrusion détecté(s).

11. Procédé de sécurité pour automobile conforme à l'une quelconque des revendications 8 et 10,
selon lequel le composant de logiciel critique pour la sécurité s'exécute sur un élément sécurisé (226, 326) de l'ECU, et l'élément sécurisé (226, 326) peut être un environnement d'exécution de confiance TEE (226, 326) et/ou un module matériel de sécurité HSM.

12. Procédé de sécurité pour automobile conforme à l'une quelconque des revendications 8 à 11,
selon lequel on attribue une priorité aux composants de logiciel et la désactivation d'au moins le composant de logiciel manipulé est en outre basée sur la priorité attribuée.

13. Procédé de sécurité automobile conforme à l'une quelconque des revendications 8 à 12,
selon lequel la technique de virtualisation est une virtualisation de hardware (220, 222, 224) ou une virtualisation de logiciel (320, 322, 324).

14. Produit-programme d'ordinateur renfermant des instructions qui, lorsqu'elles sont chargées et exécutées par au moins un processeur commandent ce processeur pour mettre en œuvre un procédé conforme à l'une quelconque des revendications 8 à 13.

15. Véhicule (110) comprenant un système de sécurité automobile (100) conforme à l'une quelconque des revendications 1 à 7.
